# EUROPÄISCHE PATENTANMELDUNG

(11) **EP 2 957 779 A1**
(43) Veröffentlichungstag der Anmeldung: **23.12.2015**
(21) Anmeldenummer: 15171475.5
(22) Anmeldetag: 10.06.2015
(51) Int. Cl.: F15B 15/28, F15B 15/14, F16D 25/08, F16J 1/00

(54) **BAUELEMENT MIT EINEM SENSORELEMENT**

(30) Priorität: 16.06.2014 DE 102014211484
(71) Anmelder: Schaeffler Technologies AG & Co. KG, 91074 Herzogenaurach (DE)
(72) Erfinder: Lertbanthornkul, Thawatchai, 77815 Bühl (DE)

(57) **Zusammenfassung**

Die Erfindung betrifft ein Bauelement (1,11,100,200) mit einem Sensorelement (6,16,106,206), wobei das Bauelement einen Körper (2,12,102,202) mit einer Aufnahme (5,15,105,205) aufweist, in welche das Sensorelement einsetzbar ist, wobei ein Deckel (7,17,107,207) vorgesehen ist, welcher auf das Bauelement aufsetzbar ist und mit dem Bauelement derart verbindbar ist, dass der Deckel im auf das Bauelement aufgesetzten Zustand die Aufnahme mit dem darin eingesetzten Sensorelement blockiert oder verschließt.

## Beschreibung

Die Erfindung betrifft ein Bauelement mit einem Sensorelement, insbesondere einen Kolben für einen Geberzylinder oder Nehmerzylinder einer Druckmittelbetätigung eines Kraftfahrzeugs.

Bei Geberzylindern von Druckmittelbetätigungen ist es für den Betrieb der Druckmittelbetätigung oder für das zu betätigende Aggregat, wie Kupplung oder Getriebe, von Bedeutung, die Position des Kolbens im Geberzylinder zu kennen. Damit kann auch der Betätigungszustand des Aggregats identifiziert werden. Auch können etwaige Bedienfehler des Aggregats erkannt werden.

Im Stand der Technik sind Geberzylinder bekannt geworden, bei welchen mit dem Kolben des Geberzylinders ein Magnet verklebt wird, damit die Position des Magneten mit der Position des Kolbens korreliert, wobei die Position des Magneten mittels eines entsprechenden Sensors außerhalb des Geberzylinders bestimmt werden kann. Der Sensor detektiert dabei das Magnetfeld aufgrund des Magneten am Ort des Sensors und daraus kann dann die Position des Magneten hergeleitet werden.

Die Verklebung des Magneten mit dem Kolben hat jedoch den Nachteil, dass der verwendete Klebstoff eine eingeschränkte chemische oder thermische Beständigkeit haben könnte. Auch könnte es zu einer Inkompatibilität des Klebstoffs mit dem verwendeten Druckmittel kommen. Dies würde zu einer Lockerung der Verbindung des Magneten mit dem Kolben führen, was zu einer Ungenauigkeit der Messung der Position des Kolbens führen würde.

Es ist die Aufgabe der vorliegenden Erfindung, ein Bauelement, wie insbesondere einen Kolben, mit einem Sensorelement zu schaffen, welches eine verbesserte dauerhafte Positionierung und Befestigung des Sensorelements erlaubt.

Auch sind Kolben bekannt, bei welchen die Sensorelemente als Magnete in Aufnahmen eingeführt sind, wobei Halteelemente in die Aufnahme eingreifen und das Sensorelement tief in der Aufnahme halten. Siehe hierzu beispielsweise die DE 10 2010 022 505 A1, die WO 2010/091658 A1 oder die DE 10 2010 036 172 A1. Dies verlangt entweder eine komplexe Gestalt von Kolben und Halteelement oder die Lagesicherheit des Sensorelements ist nicht gut gewährleistet, weil zusätzliche Aufgaben mit dem Halteelement übernommen werden, was zu Krafteinleitungen auf das Halteelement führt und somit die Funktion der Halterung des Sensorelements nicht immer gewährleistet werden kann.

Die Aufgabe der Erfindung wird mit den Merkmalen von Anspruch 1 gelöst.

Ein Ausführungsbeispiel der Erfindung betrifft ein Bauelement mit einem Sensorelement, wobei das Bauelement einen Körper mit einer Aufnahme aufweist, in welche das Sensorelement einsetzbar ist, wobei ein Deckel vorgesehen ist, welcher auf das Bauelement aufsetzbar ist und mit dem Bauelement derart verbindbar ist, dass der Deckel im auf den Bauelement aufgesetzten Zustand die Aufnahme mit dem darin eingesetzten Sensorelement blockiert oder verschließt. So kann das Sensorelement, wie insbesondere ein Magnet oder ein Magnetelement, in die Aufnahme eingesetzt werden und mit dem Deckel, der auf den Körper aufsetzbar ist, kann das Sensorelement in der Aufnahme fest gehalten werden.

Dabei kann vorteilhaft ein elastisches Element oder ein Federelement vorgesehen sein, das in der Aufnahme, das an dem Deckel angeordnet ist, so dass das Sensorelement sich gegen den Deckel oder den Körper abstützen kann und sich nicht in der Aufnahme bewegen kann.

Besonders vorteilhaft ist es, wenn das Bauelement einen im Wesentlichen zylindrischen Körper mit einer zylindrischen Wandung und zwei im Wesentlichen kreisförmigen Stirnseiten aufweist. So kann eine bauraumsparende Gestaltung gewählt werden. Ein Ausführungsbeispiel ist besonders vorteilhaft, weil die Aufnahme in dem Bauelement derart angeordnet ausgebildet ist, dass sie an einer Stirnseite des Bauelements offen ausgebildet ist.

Gemäß der Erfindung ist es vorteilhaft, wenn der Deckel an einer Stirnseite des Bauelements auf das Bauelement aufsetzbar ist.

Gemäß der Erfindung ist es besonders zweckmäßig, wenn der Deckel mittels zumindest eines Verbindungsmittels oder mittels Verbindungsmitteln an der Stirnseite des Bauelements mit dem Bauelement verbindbar ist. So kann das Bauelement, wie als Kolben, sich an der Umfangsfläche in einem Zylinder bewegen und die Befestigung erfolgt über die Stirnseite des Bauelements.

Auch ist es vorteilhaft, wenn das Verbindungsmittel ein Mittel zur reibschlüssigen oder formschlüssigen Verbindung ist oder dass die Verbindungsmittel Mittel zur reibschlüssig oder formschlüssigen Verbindung sind. So kann gegebenenfalls kleberfrei gearbeitet werden, was weniger anfällig für Störungen sein kann.

Auch ist es zweckmäßig, wenn die Verbindungsmittel zur reibschlüssigen Verbindung zumindest einen Zapfen oder mehrere Zapfen und zumindest eine Bohrung oder mehrere Bohrungen aufweist bzw. aufweisen, wobei die der Zapfen oder die Zapfen in die Bohrung oder in die Bohrungen einführbar ist bzw. sind, wobei der Zapfen oder die Zapfen einen ersten Durchmesser aufweisen und die Bohrung oder die Bohrungen einen zweiten Durchmesser aufweist bzw. aufweisen, wobei der erste Durchmesser mit Übermaß gegenüber dem zweiten Durchmesser ausgebildet ist. So kann eine reibschlüssige Verbindung erzeugt werden, indem der oder die Zapfen mit Übermaß in die Bohrung bzw. in die Bohrungen als Aufnahmen eingepresst werden können.

Dabei kann gemäß der Erfindung eine Mehrzahl von Zapfen und Bohrungen angeordnet sein, welche über die Fläche der Stirnseite verteilt angeordnet sind.

Auch ist es vorteilhaft, wenn der oder die Zapfen an dem Deckel angebracht ist bzw. sind und die Bohrung oder die Bohrungen in dem Körper des Bauelements eingebracht ist oder sind oder der oder die Zapfen an dem Körper des Bauelements angebracht ist oder sind und die Bohrung oder die Bohrungen in dem Deckel eingebracht ist oder sind.

Besonders vorteilhaft ist es, wenn die Verbindungsmittel zur formschlüssigen Verbindung Zapfen mit Rastmitteln, wie beispielsweise Rasthaken, und Bohrungen mit Gegenrastmitteln, wie beispielsweise Gegenrasthaken, aufweisen, wobei die Zapfen in die Bohrungen einführbar sind, so dass die Rasthaken sich mit den Gegenrasthaken verrasten oder die Rastmittel sich mit den Gegenrastmitteln verrasten. So kann eine sichere Verbindung erzeugt werden.

Auch ist es vorteilhaft, wenn der oder die Zapfen an dem Deckel angebracht ist bzw. sind und die Bohrung oder die Bohrungen in dem Körper des Bauelements angebracht ist bzw. sind oder der Zapfen oder die Zapfen an dem Körper des Bauelements angebracht ist bzw. sind und die Bohrung oder Bohrungen in dem Deckel eingebracht ist bzw. sind. Dadurch kann eine sichere Verbindung bzw. Verrastung erzielt werden.

Besonders vorteilhaft ist es, wenn der Deckel mit dem Körper mittels zumindest einer Nietverbindung oder einer Stiftverbindung verbunden ist.

Auch ist es vorteilhaft, wenn das Sensorelement kreissegmentförmig oder kreisringsegmentförmig ausgebildet ist. Dadurch kann das Vorsehen von ringförmigen Sensorelementen vermieden werden, die deutlich teurer sind.

Vorteilhaft ist insbesondere dabei, wenn das Bauelement gegen ein Verdrehen gesichert ist, wie bei einem Kolben beispielsweise über seine Anlenkung an einer Kolbenstange.

Auch ist es zweckmäßig, wenn die Aufnahme für das Sensorelement kreissegmentförmig oder kreisringsegmentförmig ausgebildet ist. So kann das Sensorelement passgenau aufgenommen und lagefixiert werden. So können Fehler aufgrund wandernder Sensorelemente vermieden werden.

Auch ist es vorteilhaft, wenn in der Aufnahme Haltemittel vorgesehen sind, welche mit einem Gegenhaltemittel des Sensorelements zusammenwirken.

Dabei ist es zweckmäßig, wenn der Deckel mit dem Körper mittels zumindest einer Nietverbindung oder einer Stiftverbindung verbunden ist.

Erfindungsgemäß ist es vorteilhaft, wenn das Bauelement ein Kolben eines Geberzylinders oder eines Nehmerzylinders oder eines anderen Elements ist.

Die vorliegende Erfindung wird nachfolgend anhand bevorzugter Ausführungsbeispiele in Verbindung mit den zugehörigen Figuren näher erläutert:
Dabei zeigen:
   - Figur 1: eine schematische dreidimensionale Darstellung eines Bauelements mit einem Sensorelement,
   - Figur 2: eine schematische dreidimensionale Darstellung des Bauelements mit einem Sensorelement der Figur 1 in einer anderen Perspektive,
   - Figur 3: eine Schnittdarstellung des Bauelements der Figur 1,
   - Figur 4: eine schematische dreidimensionale Darstellung eines alternativen Bauelements mit einem Sensorelement,
   - Figur 5: eine Schnittdarstellung des Bauelements gemäß Figur 4,
   - Figur 6: eine schematische dreidimensionale Darstellung eines weiteren Ausführungsbeispiels eines Bauelements mit einem Sensorelement, welches in eine Aufnahme des Bauelements einsetzbar ist,
   - Figur 7: eine Schnittdarstellung des Bauelements nach Figur 6 mit einem Sensorelement und mit einem aufgesetzten Deckel,
   - Figur 8: eine schematische dreidimensionale Darstellung eines weiteren Ausführungsbeispiels eines Bauelements mit einer Aufnahme, in welche ein Sensorelement einsetzbar ist,
   - Figur 9: ein Sensorelement zum Einsetzten in die Aufnahme des Bauelements nach Figur 8, und
   - Figur 10: eine Schnittdarstellung des Bauelements nach Figur 8 mit einem Sensorelement und mit einem aufgesetzten Deckel.

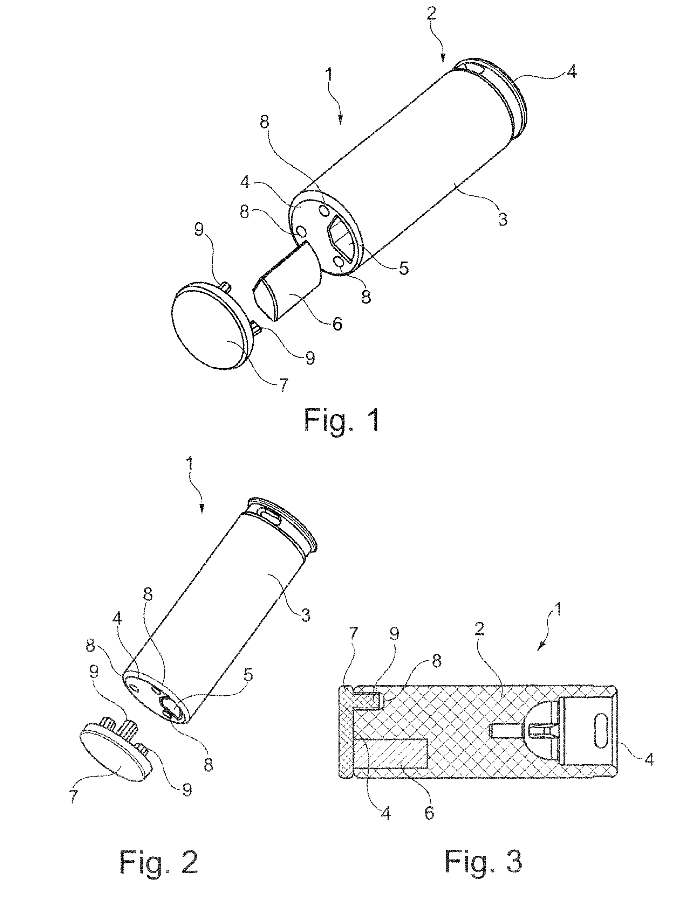

Die Figuren 1 bis 3 zeigen in verschiedenen Darstellungen ein Bauelement 1, welches zur Erläuterung als Kolben ausgebildet ist. Das Bauelement 1 kann jedoch auch ohne Beschränkung der Allgemeinheit anderweitig ausgebildet sein.

Der Kolben ist dabei bevorzugt ein Kolben eines Geberzylinders oder eines Nehmerzylinders oder einer anderweitigen Vorrichtung.

Das Bauelement 1 als Kolben ist mit einem Körper 2 ausgebildet, welcher zylindrisch ausgebildet ist, mit einer zylindrischen Wandung 3 und zwei kreisförmigen Stirnseiten 4. Der Körper 2 weist eine Aufnahme 5 auf, wie eine Aussparung. Die Aufnahme 5 ist zu einer der Stirnseiten 4 offen ausgebildet, so dass ein Sensorelement 6 in die Aufnahme 5 eingeführt werden kann.

Das Sensorelement 6 ist als Zylinderabschnitt oder Zylindersegment ausgebildet und kann in die entsprechend konfektionierte Aufnahme 5 eingesetzt werden.

Weiterhin ist ein Deckel 7 vorgesehen, welcher auf das Bauelement 1, wie insbesondere auf eine Stirnseite 4 des Bauelements 1, aufsetzbar ist und mit dem Körper 2 verbindbar ist, wobei der Deckel 7 mit dem Bauelement 1 derart verbindbar ist, dass das in die Aufnahme 5 eingesetzte Sensorelement 6 in der Aufnahme blockiert ist bzw. die Aufnahme 5 dadurch verschlossen ist.

In Figur 1 ist zu erkennen, dass die Aufnahme an der Stirnseite 4 offen ausgebildet ist und die Kontur des Zylindersegments des Sensorelements 6 als Außenkontur der Aufnahme aufweist. Alternativ kann das Sensorelement 6 auch eine anderweitige Kontur aufweisen. Dabei würde die Aufnahme 5 entsprechend ausgebildet sein, um das Sensorelement 6 aufzunehmen.

Weiterhin ist zu erkennen, dass an der Stirnseite 4 weitere Öffnungen 8 verteilt angeordnet sind. Diese Öffnungen 8 sind als Bohrungen ausgebildet, die zur Aufnahme von Zapfen 9 dienen, welche an dem Deckel 7 angebracht sind und von dem Deckel 7 abragen.

Die Zapfen 9 und die als Bohrungen ausgebildeten Öffnungen 8 sind Verbindungsmittel, welche dazu dienen, den Deckel an dem Körper 2 sicher zu befestigen und das Sensorelement 6 sicher in der Aufnahme 5 zu halten. Dabei greift der Deckel 7 nicht in die Aufnahme 5 ein, sondern überdeckt zumindest die Aufnahme 5, bevorzugt jedoch nahezu die gesamte Stirnseite 4.

Dabei ist der Deckel 7 mit Verbindungsmitteln versehen, wobei auch die Stirnseite 4 des Körpers 2 mit Verbindungsmitteln versehen ist. Im gezeigten Ausführungsbeispiel sind an dem Deckel 7 die Zapfen 9 angebracht, wobei an der Stirnseite 4 des Körpers die Öffnungen 8 als Bohrungen als diesseitige Verbindungsmittel angebracht sind. Alternativ kann es aber auch vorteilhaft sein, wenn an dem Deckel Bohrungen und an dem Körper Zapfen angebracht sind zur gegenseitigen Befestigung.

Die Verbindungsmittel 8, 9 sind Mittel zur reibschlüssigen Verbindung des Deckels mit dem Körper. Dabei sind die Verbindungsmittel zur reibschlüssigen Verbindung Zapfen 9 und Öffnungen bzw. Bohrungen 8, wobei die Zapfen 9 in die Öffnungen bzw. Bohrungen 8 einführbar sind, wobei die Zapfen 9 einen ersten Durchmesser aufweisen und die Öffnungen bzw. Bohrungen 8 einen zweiten Durchmesser aufweisen, wobei der erste Durchmesser mit Übermaß gegenüber dem zweiten Durchmesser ausgebildet ist. Dies bedeutet, dass die Zapfen 9 in die Bohrungen 8 eingepresst werden und so der Deckel 7 mit dem Körper 2 verbunden wird.

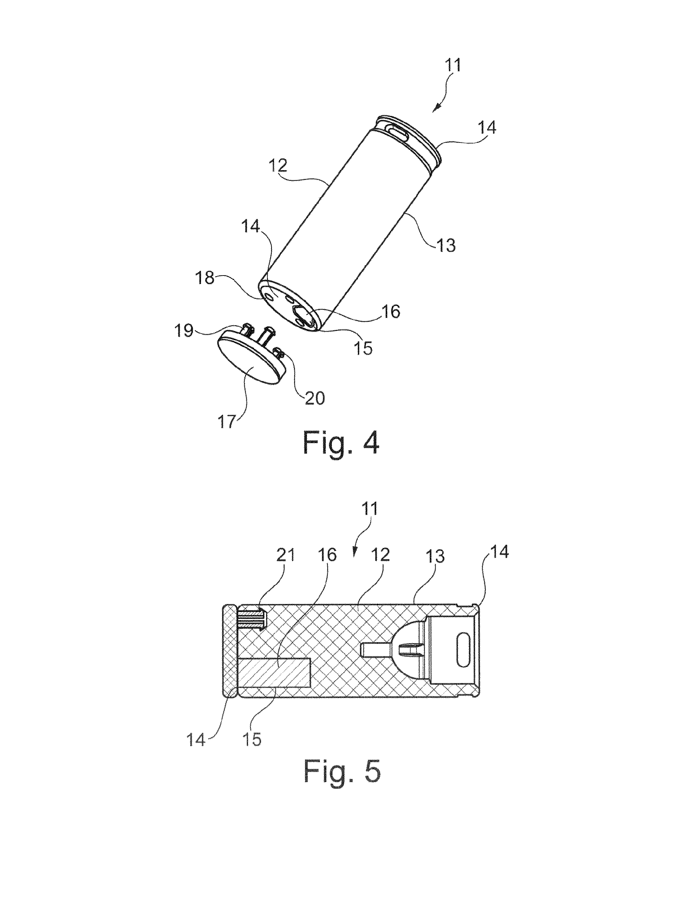

Die Figuren 4 und 5 zeigen in verschiedenen Darstellungen ein Bauelement 11, welches zur Erläuterung wiederum beispielhaft als Kolben ausgebildet ist. Der Kolben ist dabei bevorzugt ein Kolben eines Geberzylinders oder eines Nehmerzylinders oder einer anderweitigen Vorrichtung.

Das Bauelement 11 als Kolben weist einen Körper 12 auf, welcher zylindrisch ausgebildet ist, mit einer zylindrischen Wandung 13 und zwei kreisförmigen Stirnseiten 14. In dem Körper 12 ist eine Aufnahme 15 ausgebildet, die wie eine Aussparung im Körper 12 ausgebildet ist. Die Aufnahme 15 ist zu einer der Stirnseiten 14 hin offen ausgebildet, so dass ein Sensorelement 16 in die Aufnahme 15 eingeführt werden kann. Das Sensorelement 16 ist als Zylinderabschnitt oder Zylindersegment ausgebildet und kann in die entsprechend konfektionierte Aufnahme 15 eingesetzt werden.

Alternativ kann das Sensorelement 16 auch eine anderweitige Kontur aufweisen. Dabei würde die Aufnahme 15 entsprechend ausgebildet sein, um das Sensorelement aufzunehmen.

Es ist auch ein Deckel 17 vorgesehen, welcher auf das Bauelement 11, wie insbesondere auf eine Stirnseite 14 des Bauelements 11, aufsetzbar ist und mit dem Körper 12 verbindbar ist. Der Deckel 17 ist mit dem Bauelement 11 derart verbindbar, dass das in die Aufnahme 15 eingesetzte Sensorelement 16 in der Aufnahme 15 blockiert ist bzw. die Aufnahme 15 dadurch verschlossen ist.

An der Stirnseite 14 des Körpers 12 sind weitere Öffnungen 18 als Bohrungen verteilt angeordnet. Diese Öffnungen 18 sind als Bohrungen ausgebildet, die zur Aufnahme von Zapfen 19 mit Rastmitteln 20 dienen, welche an dem Deckel 17 angebracht sind und von dem Deckel 17 abragen.

Die Zapfen 19 mit den Rastmitteln 20 und die als Bohrungen ausgebildeten Öffnungen 18 mit Gegenrastmitteln 21 sind Verbindungsmittel, welche dazu dienen, den Deckel 17 an dem Körper 12 sicher zu befestigen und das Sensorelement 16 sicher in der Aufnahme 15 zu halten. Dabei greift der Deckel 17 nicht in die Aufnahme 15 ein, sondern überdeckt zumindest die Aufnahme 15, bevorzugt jedoch nahezu die gesamte Stirnseite 14.

Der Deckel 17 ist mit den Verbindungsmitteln ausgebildet, wobei auch die Stirnseite 14 des Körpers 12 mit Verbindungsmitteln versehen ist. Im gezeigten Ausführungsbeispiel sind an dem Deckel 17 die Zapfen 19 mit den Rastmitteln 20 angebracht, wobei an der Stirnseite 14 des Körpers die Öffnungen 18 mit Gegenrastmitteln 21 als Verbindungsmittel angebracht sind. Alternativ kann es auch vorteilhaft sein, wenn an dem Deckel die Bohrungen und an dem Körper die Zapfen angebracht sind zur gegenseitigen Befestigung.

Die Verbindungsmittel 18, 20, 19 und 21 sind Mittel zur formschlüssigen Verbindung des Deckels 17 mit dem Körper 12. Dabei sind die Zapfen 19 in die Bohrungen 18 einführbar, wobei die Rastmittel 20 der Zapfen 19 mit den Gegenrastmitteln 21 der Öffnungen 18 verrasten.

Die Rastmittel 20 sind Rasthaken, die von dem Zapfen abstehen, die in Aufnahmen als Gegenrastmittel der Öffnungen 18 eingreifen und einen Rand dieser Öffnungen hintergreifen.

Alternativ kann der Deckel auch mittels einer Nietverbindung oder Stiftverbindung mit dem Körper verbindbar sein.

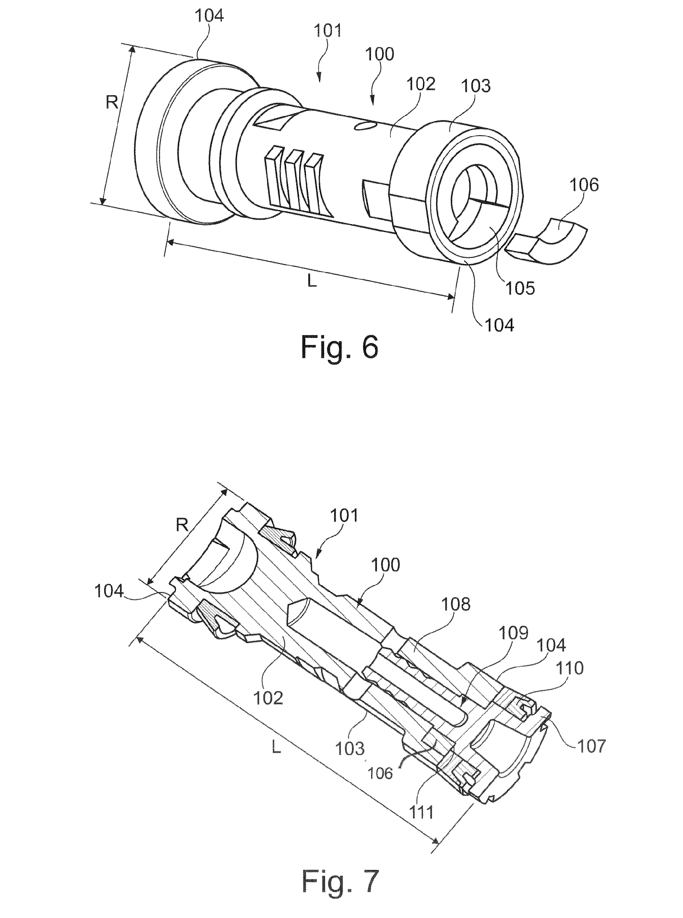

Die Figuren 6 und 7 zeigen ein weiteres Ausführungsbeispiel eines erfindungsgemäßen Bauelements 100 in verschiedenen Darstellungen. Das Bauelement 100 ist am Beispiel eines Kolbens 101 erläutert. Der Kolben 101 ist dabei bevorzugt ein Kolben 101 eines Geberzylinders oder eines Nehmerzylinders oder einer anderweitigen Vorrichtung. Das Bauelement 100 kann jedoch auch ohne Beschränkung der Allgemeinheit anderweitig ausgebildet sein.

Das Bauelement 100 als Kolben 101 ist mit einem Körper 102 ausgebildet, welcher im Wesentlichen zylindrisch ausgebildet ist, mit einer zylindrischen Wandung 103 und zwei im Wesentlichen kreisförmigen Stirnseiten 104. Dabei zeigt sich in den Figuren 6 und 7, dass der im Wesentlichen zylindrische Körper 102 allerdings keinen über seine Länge L in Längsrichtung gleichmäßige Ausdehnung R in radialer Richtung aufweisen muss. Die Figur 7 zeigt, dass der zylindrische Körper abgestufte Radien aufweist, wobei der Radius des zylindrischen Körpers an den Endbereichen des zylindrischen Körpers am größten ist. Zwischen den Endbereichen ist der Radius reduziert. Der Körper bildet dadurch beispielsweise Ringbereiche zur Aufnahme von Dichtungselementen aus.

Der Körper 102 weist eine Aufnahme 105 auf, wie eine Aussparung. Die Aufnahme 105 ist zu einer der Stirnseiten 104 hin offen ausgebildet, so dass ein Sensorelement 106 in die Aufnahme 105 eingeführt werden kann. Das Sensorelement 106 ist kreisringsegmentförmig ausgebildet und die Aufnahme 105 hat im Wesentlichen die gleiche Kontur. Dabei ist es vorteilhaft, wenn das Sensorelement 106 mit einer gewissen Presspassung in die Aufnahme einsetzbar ist, so dass das Sensorelement in der Aufnahme nicht lose bzw. verschieblich aufgenommen ist. Die Aufnahme 105 ist nach radial innen offen ausgebildet. Dort hat der Körper 102 eine sich längserstreckende Aufnahme 108 für einen Zapfen 109 eines Deckels 107. Der Deckel 107 durchgreift dabei mit dem Zapfen 109 auch einen vorgesehenen Dichtring 110 und deckt mit einer Schulter 111 die Aufnahme 105 für das Sensorelement 106 zumindest teilweise in axialer Richtung ab, so dass das Sensorelement 106 nicht aus der Aufnahme 105 herausfallen kann. Der Zapfen 109 ist als zentraler Zapfen an dem Deckel 107 angebracht, wie vorteilhaft als Kunststoffteil gespritzt, und er greift form- und/oder reibschlüssig in die Aufnahme 108 des Körpers 102 ein.

Das Sensorelement 106 ist als kreisringsegmentförmiges Element ausgebildet, man kann es auch als zylinderabschnittsförmig oder zylindersegmentartig bezeichnen, und es kann in die entsprechend konfektionierte Aufnahme 105 eingesetzt werden.

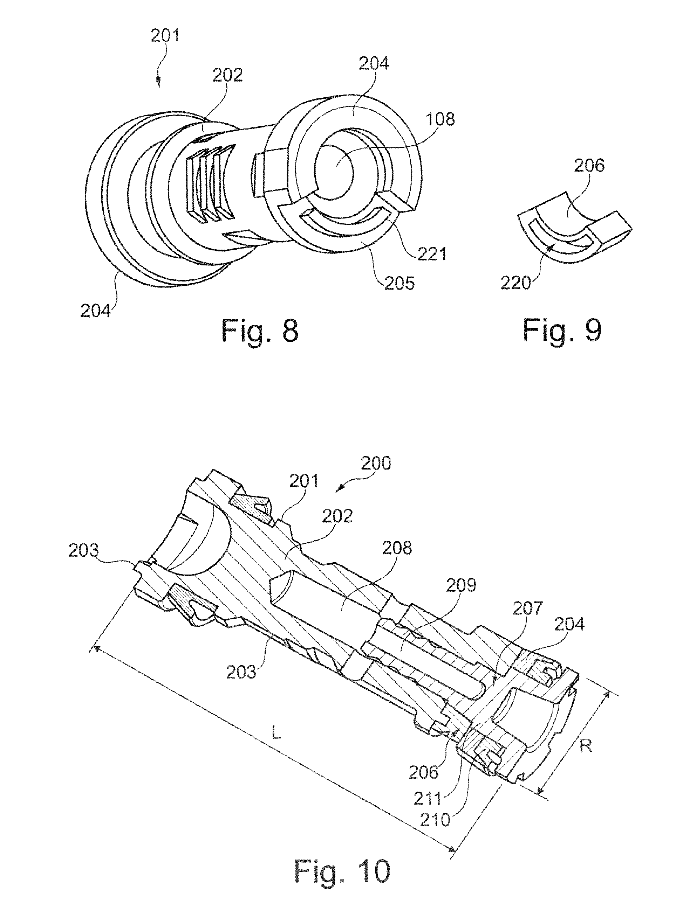

Die Figuren 8 bis 10 zeigen ein weiteres Ausführungsbeispiel eines erfindungsgemäßen Bauelements 200 in verschiedenen Darstellungen. Das Bauelement 200 ist wieder am Beispiel eines Kolbens 201 beschrieben. Der Kolben 201 ist dabei insbesondere ein Kolben 201 eines Geberzylinders oder eines Nehmerzylinders oder einer anderweitigen Vorrichtung. Das Bauelement 200 kann jedoch auch ohne Beschränkung der Allgemeinheit anderweitig ausgebildet sein.

Das Bauelement 200 als Kolben 201 ist mit einem Körper 202 ausgebildet, welcher im Wesentlichen zylindrisch ausgebildet ist, mit einer zylindrischen Wandung 203 und zwei im Wesentlichen kreisförmigen Stirnseiten 204. Der Kolben 201 ist dabei im Wesentlichen dem Kolben 101 nachgebildet. Dabei zeigt sich auch in den Figuren 8 bis 10, analog zu den Figuren 6 und 7, dass der im Wesentlichen zylindrische Körper 202 keinen über seine Länge L in Längsrichtung gleichmäßige Ausdehnung R in radialer Richtung aufweist. Die Figur 10 zeigt, dass der zylindrische Körper 202 abgestufte Radien aufweist, wobei der Radius des zylindrischen Körpers an den Endbereichen des zylindrischen Körpers am größten ist. Zwischen den Endbereichen ist der Radius reduziert. Der Körper bildet dadurch beispielsweise Ringbereiche zur Aufnahme von Dichtungselementen aus.

Der Körper 202 weist erneut eine Aufnahme 205 auf, wie eine Aussparung. Die Aufnahme 205 ist zu einer der Stirnseiten 204 hin offen ausgebildet, so dass ein Sensorelement 206 in die Aufnahme 205 eingeführt werden kann. Das Sensorelement 206 ist kreisringsegmentförmig ausgebildet und die Aufnahme 205 hat im Wesentlichen die gleiche Kontur. Dabei ist es vorteilhaft, wenn das Sensorelement 206 mit einer gewissen Presspassung in die Aufnahme einsetzbar ist, so dass das Sensorelement in der Aufnahme nicht lose bzw. verschieblich aufgenommen ist. Die Aufnahme 205 ist nach radial innen offen ausgebildet. Dort hat der Körper 202 eine sich längserstreckende Aufnahme 208 für einen Zapfen 209 eines Deckels 207. Der Deckel 207 durchgreift dabei mit dem Zapfen 209 auch einen vorgesehenen Dichtring 210 und deckt mit einer Schulter 211 die Aufnahme 205 für das Sensorelement 206 zumindest teilweise in axialer Richtung ab, so dass das Sensorelement 206 nicht aus der Aufnahme 205 herausfallen kann. Der Zapfen 209 ist als zentraler Zapfen an dem Deckel 207 angebracht, wie vorteilhaft als Kunststoffteil gespritzt, und er greift form- und/oder reibschlüssig in die Aufnahme 208 des Körpers 202 ein.

Das Sensorelement 206 ist als kreisringsegmentförmiges Element ausgebildet, man kann es auch als zylinderabschnittsförmig oder zylindersegmentartig bezeichnen, und es kann in die entsprechend konfektionierte Aufnahme 205 eingesetzt werden. Zur besseren Lagesicherung des Sensorelements 206 weist das Sensorelement 206 eine Aufnahme 220 und die Aussparung eine Rippe 221 auf, die in die Aufnahme 220 eingreift. Die Rippe 221 ist eine gebogene, in Längsrichtung des Körpers 202 vorstehende Rippe 221, wobei die Aufnahme 220 ebenfalls eine gebogene Aufnahme ist, welche mit der Kontur der Rippe 221 korrespondiert.

Die gezeigten Sensorelemente sind vorteilhaft in ihren Aufnahmen passend eingesetzt, so dass sie bei Erschütterungen nicht in den Aufnahmen wackeln können. Gleiches gilt für den oder die Zapfen des Deckels. Diese sind vorteilhaft auch in die diesbezüglichen Aufnahmen eingepresst und/oder mittels Klebstoff geklebt.

Das beschriebene Sensorelement ist bevorzugt ein magnetisches Element.

### Bezugszeichenliste

- 1: Bauelement, wie beispielsweise Kolben
- 2: Körper
- 3: Wandung
- 4: Stirnseite
- 5: Aufnahme
- 6: Sensorelement
- 7: Deckel
- 8: Öffnung, Bohrung
- 9: Zapfen
- 11: Bauelement, wie beispielsweise Kolben
- 12: Körper
- 13: Wandung
- 14: Stirnseite
- 15: Aufnahme
- 16: Sensorelement
- 17: Deckel
- 18: Öffnung
- 19: Zapfen
- 20: Rastmittel
- 21: Gegenrastmittel
- 100: Bauelement, wie beispielsweise Kolben
- 101: Kolben
- 102: Körper
- 103: Wandung
- 104: Stirnseite
- 105: Aufnahme
- 106: Sensorelement
- 107: Deckel
- 108: Aufnahme
- 109: Zapfen
- 110: Dichtring
- 111: Schulter
- 200: Bauelement, wie beispielsweise Kolben
- 201: Kolben
- 202: Körper
- 203: Wandung
- 204: Stirnseite
- 205: Aufnahme
- 206: Sensorelement
- 207: Deckel
- 208: Aufnahme
- 209: Zapfen
- 210: Dichtring
- 211: Schulter
- 220: Aufnahme
- 221: Rippe

## Patentansprüche

1. Bauelement (1,11,100,200) mit einem Sensorelement (6,16,106,206), wobei das Bauelement (1,11,100,200) einen Körper (2,12,102,202) mit einer Aufnahme (5,15,105,205) aufweist, in welche das Sensorelement (6,16106,206) einsetzbar ist, wobei ein Deckel (7,17,107,207) vorgesehen ist, welcher auf das Bauelement (1,11100,200) aufsetzbar ist und mit dem Bauelement (1,11,100,200) derart verbindbar ist, dass der Deckel (7,17,107,207) im auf das Bauelement (1,11,100,200) aufgesetzten Zustand die Aufnahme (5,15,105,205) mit dem darin eingesetzten Sensorelement (6,16,106,206) blockiert oder verschließt.

2. Bauelement (1,11,100,200) nach Anspruch 1, **dadurch gekennzeichnet, dass** das Bauelement (1,11,100,200) einen im Wesentlichen zylindrischen Körper (2,12,102,202) mit einer zylindrischen Wandung (3,13,103,203) und zwei im Wesentlichen kreisförmigen Stirnseiten (4,14,104,204) aufweist.

3. Bauelement (1,11,100,200) nach Anspruch 2, **dadurch gekennzeichnet, dass** die Aufnahme in dem Bauelement (1,11,100,200) derart angeordnet ausgebildet ist, dass sie an einer Stirnseite (4,14,104,204) des Bauelements (1,11,100,200) offen ausgebildet ist.

4. Bauelement (1,11,100,200) nach Anspruch 2 oder 3, **dadurch gekennzeichnet, dass** der Deckel an einer Stirnseite (4,14,104,204) des Bauelements (1,11,100,200) auf das Bauelement (1,11,100,200) aufsetzbar ist.

5. Bauelement (1,11,100,200) nach Anspruch 4, **dadurch gekennzeichnet, dass** der Deckel mittels zumindest eines Verbindungsmittels oder mittels Verbindungsmitteln (8,9,18,19,20,21,109,209,108,208) an der Stirnseite (4,14,104,204) des Bauelements (1,11,100,200) mit dem Bauelement (1,11,100,200) verbindbar ist.

6. Bauelement (1,11,100,200) nach Anspruch 5, **dadurch gekennzeichnet, dass** das Verbindungsmittel ein Mittel zur reibschlüssig oder formschlüssigen Verbindung ist oder dass die Verbindungsmittel (8,9,18,19,20,21,108,109,208,209) Mittel zur reibschlüssig oder formschlüssigen Verbindung sind.

7. Bauelement (1,11,100,200) nach Anspruch 6, **dadurch gekennzeichnet, dass** die Verbindungsmittel (8,9,108,109,208,209) zur reibschlüssigen Verbindung zumindest einen Zapfen (9,109,209) oder mehrere Zapfen (9) und zumindest eine Bohrung oder mehrere Bohrungen (8,108,208) aufweisen, wobei der Zapfen (109,209) in eine Bohrung (108,208) einführbar ist oder die Zapfen (9) in die Bohrungen (8) einführbar sind.

8. Bauelement (1,11,100,200) nach Anspruch 7, **dadurch gekennzeichnet, dass** der Zapfen einen ersten Durchmesser aufweist und die Bohrung einen zweiten Durchmesser aufweist oder die Zapfen (9,109,209) einen ersten Durchmesser aufweisen und die Bohrungen (8,108,208) einen zweiten Durchmesser aufweisen, wobei der erste Durchmesser mit Übermaß gegenüber dem zweiten Durchmesser ausgebildet ist.

9. Bauelement (1,11,100,200) nach Anspruch 7 oder 8, **dadurch gekennzeichnet, dass** der Zapfen oder die Zapfen (9,109,209) an dem Deckel (7,107,207) angebracht ist bzw. sind und die Bohrung oder die Bohrungen (8,108,208) in dem Körper (2,102,202) des Bauelements vorgesehen ist bzw. sind oder der Zapfen oder die Zapfen (9) an dem Körper (2) des Bauelements (1) angebracht ist bzw. sind und die Bohrung oder die Bohrungen (8) in dem Deckel (7) eingebracht ist bzw. sind.

10. Bauelement (1,11,100,200) nach Anspruch 6, **dadurch gekennzeichnet, dass** das oder die Verbindungsmittel (18,19,20,21) zur formschlüssigen Verbindung zumindest einen Zapfen oder mehrere Zapfen (19) mit Rasthaken (20) und zumindest eine Bohrung oder Bohrungen (18) mit Gegenrastmitteln (21) aufweisen, wobei der Zapfen in die Bohrung oder die Zapfen (19) in die Bohrungen (18) einführbar ist bzw. sind, so dass der Rasthaken mit dem Gegenrasthaken verrastet oder die Rastmittel (20) sich mit den Gegenrastmitteln (21) verrasten.

11. Bauelement (1,11,100,200) nach Anspruch 10, **dadurch gekennzeichnet, dass** der oder die Zapfen (19) an dem Deckel (17) angebracht ist bzw. sind und die Bohrung oder die Bohrungen (18) in dem Körper (12) des Bauelements (11) angebracht ist bzw. sind oder der Zapfen oder die Zapfen (19) an dem Körper (12) des Bauelements (11) angebracht ist bzw. sind und die Bohrung oder Bohrungen (18) in dem Deckel (17) eingebracht ist bzw. sind.

12. Bauelement (1,11,100,200) nach Anspruch 6, **dadurch gekennzeichnet, dass** der Deckel (7,17) mit dem Körper (2,12) mittels zumindest einer Nietverbindung oder einer Stiftverbindung verbunden ist.

13. Bauelement (1,11,100,200) nach einem der vorhergehenden Ansprüche, **dadurch gekennzeichnet, dass** das Sensorelement (6,16,106,206) kreissegmentförmig oder kreisringsegmentförmig ausgebildet ist.

14. Bauelement (1,11,100,200) nach einem der vorhergehenden Ansprüche, **dadurch gekennzeichnet, dass** in der Aufnahme Haltemittel vorgesehen sind, welche mit einem Gegenhaltemittel des Sensorelements zusammenwirken.

15. Bauelement (1,11,100,200) nach zumindest einem der vorhergehenden Ansprüche, **dadurch gekennzeichnet, dass** das Bauelement (1,11) ein Kolben eines Geberzylinders oder eines Nehmerzylinders oder eines anderen Elements ist.
